(19) Europäisches Patentamt
European Patent Office
Office européen des brevets

(11) **EP 4 621 571 A1**

(12) **EUROPEAN PATENT APPLICATION**
published in accordance with Art. 153(4) EPC

(43) Date of publication:
24.09.2025 Bulletin 2025/39

(21) Application number: 23931188.9

(22) Date of filing: 21.12.2023

(51) International Patent Classification (IPC):
*G06F 9/50* (2006.01)          *G06F 9/54* (2006.01)
*G06F 9/48* (2006.01)

(52) Cooperative Patent Classification (CPC):
**G06F 9/505; G06F 9/4893; G06F 9/5094;
G06F 9/54;** G06F 2209/5017; G06F 2209/509

(86) International application number:
PCT/KR2023/021288

(87) International publication number:
WO 2025/089501 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.10.2023 KR 20230142928

(71) Applicant: Daegu Gyeongbuk Institute Of
Science and Technology
Daegu 42988 (KR)

(72) Inventors:
• KWAK, Jeong Ho
  Daegu 43016 (KR)
• CHOI, Ji Woong
  Seoul 06213 (KR)
• YOON, Pil Do
  Daejeon 34159 (KR)
• CHOI, Sin Uk
  Daegu 41967 (KR)
• CHOI, Pyeong Jun
  Daejeon 34066 (KR)

(74) Representative: Caspary, Karsten et al
Kroher-Strobel
Rechts- und Patentanwälte PartmbB
Bavariaring 20
80336 München (DE)

(54) **METHOD AND DEVICE FOR DETERMINING OPTIMAL LOAD BALANCING IN A VEHICLE**

(57) The present disclosure relates to a method and device for determining optimal load balancing in a vehicle. According to an embodiment of the present disclosure, there may be provided a method of determining optimal load balancing in a vehicle, the method including: obtaining at least one first element that is time-independent; obtaining at least one second element that is time-dependent, every preset time interval; based on the at least one first element and the at least one second element, determining a clock frequency of the computational device in the vehicle that minimizes energy consumption of the vehicle, a first amount of computation to be transmitted from the computational device to an edge, and a second amount of computation to be transmitted from the computational device to a cloud; transmitting the first amount of computation to the edge and transmitting the second amount of computation to the cloud; and performing computation based on the clock frequency.

FIG. 1

**Description**

**Technical Field**

The present disclosure relates to a method and device for determining optimal load balancing in a vehicle.

**Background Art**

With the recent advancement of autonomous vehicles, the types of services that require processing during driving, such as lane keeping and emergency braking, are diversifying. In addition, the amount of computation required in processing each service is also increasing.

Computational devices such as electronic control units (ECUs) in autonomous vehicles need to process an amount of computation of a service that requires real-time processing within a preset time period. Delays in computation of a computational device may increase the risk of accidents, such as suspension of the operation of an autonomous vehicle.

The installation of high-performance computational devices inside vehicles to solve such problems increases the vehicles' energy consumption and leads to increased installation costs.

Accordingly, research on edge computing has been actively conducted recently. Edge computing is a technology for distributing an amount of computation required to be processed by an in-vehicle computational device for an in-vehicle service, to a computing node such as an edge or a cloud installed near a relay station through vehicular communication, thereby reducing the computational load of vehicles.

However, there is a problem that there may be a delay in a network used to distribute an amount of computation from an in-vehicle computational device to an edge and a cloud, as well as a delay in the edge and the cloud processing the amount of computation.

As described above, there is a need for research on a method of distributing an amount of computation in a vehicle, for minimizing the energy consumption of the vehicle by considering a time delay in transmitting the amount of computation and a time delay in processing the amount of computation.

**Disclosure**

**Technical Problem**

The present disclosure provides a method and device for determining optimal load balancing in a vehicle. Technical objectives of the present disclosure are not limited to the foregoing, and other unmentioned objectives or advantages of the present disclosure would be understood from the following description and be more clearly understood from the embodiments of the present disclosure. In addition, it would be appreciated that the objectives and advantages of the present disclosure may be implemented by means provided in the claims and a combination thereof.

**Technical Solution**

A first aspect of the present disclosure may provide a method of determining optimal load balancing in a vehicle, the method including: obtaining at least one first element that is time-independent; obtaining at least one second element that is time-dependent, every preset time interval; based on the at least one first element and the at least one second element, determining a clock frequency of the computational device in the vehicle that minimizes energy consumption of the vehicle, a first amount of computation to be transmitted from the computational device to an edge, and a second amount of computation to be transmitted from the computational device to a cloud; transmitting the first amount of computation to the edge and transmitting the second amount of computation to the cloud; and performing computation based on the clock frequency.

A second aspect of the present disclosure may provide a device of determining optimal load balancing in a vehicle, the device including: at least one memory; and at least one processor, wherein the at least one processor is configured to obtain at least one first element that is time-independent, obtain at least one second element that is time-dependent, every preset time interval, determine, based on the at least one first element and the at least one second element, a clock frequency of the computational device in the vehicle that minimizes energy consumption of the vehicle, a first amount of computation to be transmitted from the computational device to an edge, and a second amount of computation to be transmitted from the computational device to a cloud, transmit the first amount of computation to the edge and transmit the second amount of computation to the cloud, and perform computation based on the clock frequency.

A third aspect of the present disclosure may provide a computer-readable recording medium having recorded thereon a program for causing a computer to execute the method according to the first aspect.

In addition, other methods and systems for implementing the present disclosure, and a computer-readable recording medium having recorded thereon a computer program for executing the methods may be further provided.

Other aspects, features, advantages other than those described above will become apparent from the following drawings, claims, and detailed description of the present disclosure.

**Advantageous Effects**

According to the problem solving means of the present disclosure described above, in the present disclosure, an amount of computation required to be processed by a computational device in a vehicle may be offloaded to an edge and a cloud so as to minimize the energy consumption of the vehicle.

In addition, in the present disclosure, the stability of the vehicle may be ensured by setting, as constraints, a time period required to offload an amount of computation from the computational device in the vehicle to the edge and the cloud, and a time period required to process an amount of computation in each of the computational device in the vehicle, the edge, and the cloud.

In addition, in the present disclosure, service compatibility of the computational device may be improved by determining amounts of computation to be offloaded from the computational device to the edge and the cloud, considering the characteristics of a service that requires processing by the computational device in the vehicle.

**Description of Drawings**

FIG. 1 is a conceptual diagram for describing a method of distributing an amount of computation of a computational device in a vehicle, according to an embodiment.

FIG. 2 is a block diagram of a device for distributing an amount of computation in a vehicle, according to an embodiment.

FIG. 3 is an exemplary configuration diagram of a system including a computational device in a vehicle, and an external device, according to an embodiment.

FIG. 4 is a flowchart for describing a method of an amount of computation in a vehicle, according to an embodiment.

FIG. 5 is a flowchart for describing a method of distributing an amount of computation in a vehicle by using constraints, according to an embodiment.

FIG. 6 is an exemplary diagram for describing a time-independent first element, a time-dependent second element, and constraints, according to an embodiment.

FIG. 7 is an exemplary diagram for describing a method of determining a time interval in which a second element is obtained, according to an embodiment.

FIG. 8 is a flowchart for describing a method of distributing an amount of computation in a vehicle by comparing energy consumption of the vehicle according to whether offloading is performed, according to an embodiment.

**Best Mode**

A method according to an embodiment of the present disclosure may obtain at least one first element that is time-independent, obtain at least one second element that is time-dependent, every preset time interval, determine, based on the at least one first element and the at least one second element, a clock frequency of the computational device in the vehicle that minimizes energy consumption of the vehicle, a first amount of computation to be transmitted from the computational device to an edge, and a second amount of computation to be transmitted from the computational device to a cloud, transmit the first amount of computation to the edge and transmit the second amount of computation to the cloud, and perform computation based on the clock frequency.

**Mode for Invention**

Advantages and features of the present disclosure and a method for achieving them will be apparent with reference to embodiments of the present disclosure described below together with the accompanying drawings. The present disclosure may, however, be embodied in many different forms and should not be construed as being limited to the embodiments set forth herein, and all changes, equivalents, and substitutes that do not depart from the spirit and technical scope of the present disclosure are encompassed in the present disclosure. These embodiments are provided such that the present disclosure will be thorough and complete, and will fully convey the concept of the present disclosure to those of skill in the art. In describing the present disclosure, detailed explanations of the related art are omitted when it is deemed that they may unnecessarily obscure the gist of the present disclosure.

Terms used herein are for describing particular embodiments and are not intended to limit the scope of the present disclosure. Singular forms are intended to include plural forms as well, unless the context clearly indicates otherwise. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Some embodiments of the present disclosure may be represented by functional block components and various processing operations. Some or all of the functional blocks may be implemented by any number of hardware and/or software elements that perform particular functions. For example, the functional blocks of the present disclosure may be embodied by at least one microprocessor or by circuit components for a certain function. In addition, for example, the functional blocks of the present disclosure may be implemented by using various programming or scripting languages. The functional blocks may be implemented by using various algorithms executable by one or more processors. Furthermore, the present disclosure may employ known technologies for electronic settings, signal processing, and/or data processing. Terms such as "mechanism", "element", "unit", or "component" are used in a broad sense and are not limited to mechanical or physical components.

In addition, connection lines or connection members between components illustrated in the drawings are merely exemplary of functional connections and/or physical or circuit connections. Various alternative or additional functional connections, physical connections, or circuit connections between components may be present in a practical device.

Hereinafter, the term 'vehicle' may refer to all types of transportation instruments with engines that are used to move passengers or goods, such as cars, buses, motorcycles, kick scooters, or trucks.

Hereinafter, the present disclosure will be described in detail with reference to the accompanying drawings.

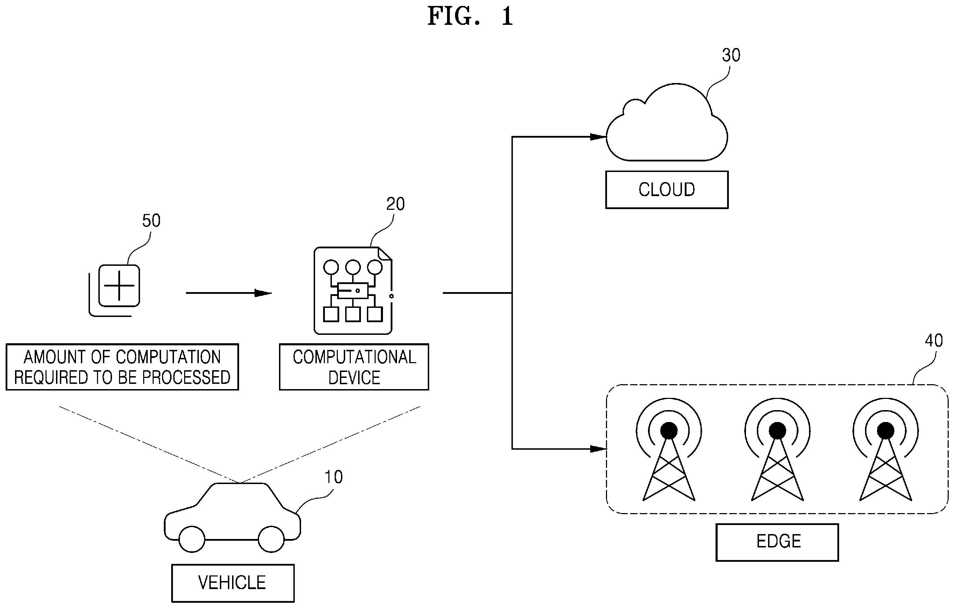

FIG. 1 is a conceptual diagram for describing a method of distributing an amount of computation of a computational device in a vehicle, according to an embodiment.

Referring to FIG. 1, a computational device 20 may be installed in a vehicle 10.

For example, the computational device 20 may correspond to a device that performs the role of controlling functions necessary for driving of the vehicle 10, such as an electronic control unit (ECU).

The computational device 20 may obtain an amount 50 of computation required to be processed. Here, the amount 50 of computation required to be processed refers to an amount of computation required to be processed by the computational device 20. For example, the computational device 20 may obtain the amount 50 of computation required to be processed, from another computational device in the vehicle 10.

With the recent advancement of the autonomous vehicle 10, the amount of computation required to be processed by the computational device 20 in the vehicle 10 is increasing. For example, services that may be provided by the autonomous vehicle 10, such as an emergency braking system and an automated lane keeping system, may increase the burden on the computational device 20 to perform computation, compared to related-art vehicles.

There may be a delay in the time required for the computational device 20 to process a large amount of computation. However, when there is a delay in processing a service directly related to the safety of the vehicle 10, such as an emergency braking system, a problem may occur in that the risk of an accident occurring in the autonomous vehicle 10 may rapidly increase.

Accordingly, the computational device 20 in the vehicle 10 may offload the amount 50 of computation required to be processed, to external devices. Here, offloading refers to distributing a rapidly increasing amount of computation to other networks. For example, the external devices may include an edge 40 and a cloud 30, but are not limited thereto. Here, the edge 40 may correspond to a road side unit (RSU).

The computational device 20 may offload the amount 50 of computation required to be processed, to external devices such as the edge 40 and the cloud 30, thereby reducing the risk of accidents in the vehicle 10, and minimizing the energy consumption of the vehicle 10.

However, in order for the computational device 20 to offload the amount 50 of computation required to be processed, it is necessary to consider various factors such as the current state of the network connecting the computational device 20, the edge 40, and the cloud 30, the computational processing capacity of the edge 40, and the cloud 30, and the energy consumption of the vehicle 10. Accordingly, research on load balancing that determines whether to offload and an amount of computation to be offloaded, have been actively conducted.

In the related art, offloading is performed assuming an ideal network environment without considering the quality of service (QoS), including delay in the communication network and stability of communication. However, in an actual network environment, when a plurality of vehicles are performing offloading at the same time, interference between vehicle signals may occur, which may degrade the communication performance. For example, when there is insufficient consideration for delays occurring in a network used in an offloading process, the offloading may rather increase the energy consumption of the vehicle 10 and reduce the stability of the vehicle performing computation.

Accordingly, the computational device 20 of the present disclosure may determine whether to perform offloading to the edge 40 and the cloud 30 by considering factors that change over time. For example, factors such as an amount of computation required to be processed by the computational device 20, the rate of transmission of an amount of computation from the computational device 20 to the edge 40, and the rate of transmission of an amount of computation from the computational device 20 to the cloud 30 may change over time. By considering such time-dependent factors to determine whether to perform offloading, the computational device 20 may minimize the energy consumption of the vehicle 10.

In addition, the computational device 20 may process the amount 50 of computation required to be processed, through a clock frequency that may minimize the energy consumption of the vehicle 10. Here, the clock frequency refers to a period of generation of clock pulses used to synchronize operations of components included in the computational device 20. For example, the computational device 20 may determine a clock frequency that may minimize energy consumption of the vehicle 10 while processing the amount of computation remaining after offloading the amount 50 of computation required to be processed to the edge 40 and cloud 30, within a preset average delay time.

In addition, the computational device 20 may use a time-based dynamic optimization technique to determine whether to offload an amount of computation to the edge 40 and cloud 30, and the clock frequency of the computational device 20.

Here, the time-based dynamic optimization technique refers to a technique that optimally controls a system that dynamically changes over time. For example, the time-based dynamic optimization technique may include Lyapunov optimization.

Lyapunov optimization is a technique that optimally controls a system that changes over time, by using a Lyapunov function. The Lyapunov function is a function widely used to ensure the stability of a system, and the value of the function increases when the stability of the system decreases. Accordingly, the computational device 20 may determine whether to offload an amount of computation to the edge 40 and the cloud 30 and determine the clock frequency, such that the value of the Lyapunov function decreases toward 0.

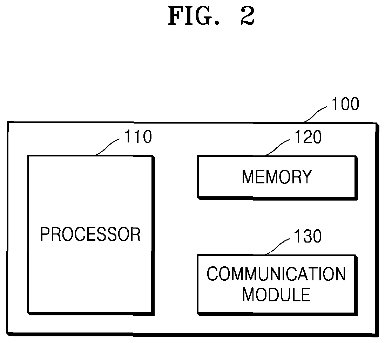

FIG. 2 is a block diagram of a device for distributing an amount of computation in a vehicle, according to an embodiment.

Referring to FIG. 2, a device 100 for distributing an amount of computation in the vehicle 10 includes a processor 110, a memory 120, and a communication module 130. For convenience of description, FIG. 2 illustrates only components related to the present disclosure. Thus, other general-purpose components than those illustrated in FIG. 2 may be further included in the device 100. In addition, it is obvious to those of skill in the art related to the present disclosure that the processor 110, the memory 120, and the communication module 130 illustrated in FIG. 2 may also be implemented as independent devices. In addition, the device 100 of FIG. 2 may be the same device as the computational device 20 of FIG. 1.

The processor 110 may process commands of a computer program by performing basic arithmetic, logic, and input/output operations. Here, the commands may be provided from the memory 120 or an external device. In addition, the processor 110 may control the overall operation of other components included in the device 100.

For example, based on a time-independent first element and a time-dependent second element, the processor 110 may determine a clock frequency of the computational device 20 that minimizes the energy consumption of the vehicle 10, a first amount of computation to be transmitted from the computational device 20 to the edge 40, and a second amount of computation to be transmitted from the computational device 20 to the cloud 30. In addition, in a process of determining the clock frequency of the computational device 20, the first amount of computation to be transmitted from the computational device 20 to the edge 40, and the second amount of computation to be transmitted from the computational device 20 to the cloud 30 as described above, the processor 110 may use a time-based dynamic optimization technique.

In addition, when determining the clock frequency, the first amount of computation, and the second amount of computation, the processor 110 may set constraints such that the average delay time, which is the time delay in performing computation, is less than or equal to a preset time period. For example, the processor 110 may determine the average delay time based on the queue lengths of the computational device 20, the edge 40, and the cloud 30.

In addition, the processor 110 may determine a certain time interval based on the amount of change in the time-dependent second element. For example, when the time-dependent second element changes beyond a preset range, the processor 110 may change the time interval.

In addition, by using a neural network model that uses, as input, a time-independent first element and a time-dependent second element, the processor 110 may determine a clock frequency of the computational device 20, a first amount of computation to be transmitted from the computational device 20 to the edge 40, and a second amount of computation to be transmitted from the computational device 20 to the cloud 30.

The processor 110 may be implemented as an array of a plurality of logic gates, or may be implemented as a combination of a general-purpose microprocessor and a memory storing a program executable by the microprocessor. For example, the processor 110 may include a general-purpose processor, a central processing unit (CPU), a microprocessor, a digital signal processor (DSP), a controller, a microcontroller, a state machine, and the like. In some environments, the processor 110 may include an application-specific integrated circuit (ASIC), a programmable logic device (PLD), a field-programmable gate array (FPGA), and the like. For example, processor 110 may refer to a combination of processing devices, such as a combination of a DSP and a microprocessor, a combination of a plurality of microprocessors, a combination of one or more microprocessors combined with a DSP core, or a combination of any other such configurations.

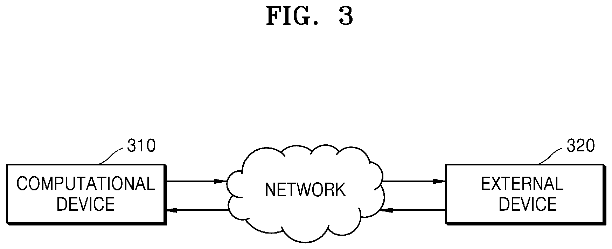

The memory 120 may include any non-transitory computer-readable recording medium. For example, the memory 120 may include a permanent mass storage device, such as random-access memory (RAM), read-only memory (ROM), a disk drive, a solid-state drive (SSD), or flash memory. As another example, the permanent mass storage device, such as ROM, an SSD, flash memory, or a disk drive, may be a permanent storage device separate from the memory. Also, the memory 120 may store an operating system (OS) and at least one piece of program code (e.g., code for the processor 110 to perform an operation to be described below with reference to FIGS. 3 to 8). For example, the memory 120 may store at least one time-independent first element that is used to determine an amount of computation to be offloaded from the computational device 20 to the edge 40 and the cloud 30.

These software components may be loaded from a computer-readable recording medium separate from the memory 120. The separate computer-readable recording medium may be a recording medium that may be directly connected to the device 100, and may include, for example, a computer-readable input/output recording medium, such as a floppy drive, a disk, a tape, a digital video disc (DVD)/compact disc ROM (CD-ROM) drive, or a memory card. Alternatively, the software components may be loaded into the memory 120 through the communication module 130 rather than a computer-readable recording medium. For example, at least one program may be loaded to the memory 120 based on a computer program (e.g., a computer program for the processor 110 to perform an operation to be described below with reference to FIGS. 3 to 8) installed by files provided by developers or a file distribution system that provides an installation file of an application, through the communication module 130.

The communication module 130 may provide a configuration or function for the device 100 to communicate with an external device (not shown) through a network. In addition, the communication module 130 may provide a configuration or function for the device 100 to communicate with other external devices. For example, a control signal, a command, data, and the like provided under control of the processor 110 may be transmitted to an external device through the communication module 130 and a network.

FIG. 3 is an exemplary configuration diagram of a system including a computational device in a vehicle, and an external device, according to an embodiment.

Referring to FIG. 3, a computational device 310 may include any type of server that manages a web and/or an app that may provide an artificial intelligence service. In addition, the computational device 310 of FIG. 3 may be the same device as the computational device 20 of FIG. 1.

In an embodiment, the computational device 310 may be an electronic device embedded in the vehicle 10. For example, the computational device 310 may be a device that is manufactured and then inserted into the vehicle 10 through tuning.

In another embodiment, a process performed by the computational device 310 may be performed by at least some of a mobile electronic device, an electronic device embedded in the vehicle 10, and a server located outside the vehicle 10.

An external device 320 may refer to an entity that provides information necessary for the computational device 310 to determine a clock frequency, a first amount of computation to be transmitted from the computational device 310 to the edge 40, and a second amount of computation to be transmitted from the computational device 310 to the cloud 30. The external device 320 may include all types of servers that manage various types of information. The external device 320 may include a database and may include, but is not limited to, a server that manages a web service application programming interface (API) that may provide information. For example, the external device 320 may correspond to another computational device included in the vehicle 10.

In addition, the external device 320 may refer to an entity that receives an amount of computation from the computational device 310. For example, the external device 320 may correspond to the edge 40 and the cloud 30 that receive an amount of computation that is offloaded from the computational device 310.

The computational device 310 and the external device 320 may communicate with each other and/or other devices through a network. The network is a comprehensive data communication network that allows different entities to seamlessly communicate with each other, and may include wired Internet, wireless Internet, and mobile wireless communication networks. For example, the network may include a local area network (LAN), a wide area network (WAN), a value-added network (VAN), a mobile radio communication network, a satellite communication network, and a combination thereof. In addition, the wireless communication may include, but is not limited to, a wireless LAN (e.g., Wi-Fi), Bluetooth, Bluetooth Low Energy, Zigbee, Wi-Fi Direct (WFD), ultra-wideband (UWB), Infrared Data Association (IrDA), and near-field communication (NFC).

The computational device 310 may perform communication with the external device 320 through a network. The computational device 310 may receive data from the external device 320 by performing communication through the network, and determine whether to offload an amount of computation, based on the received data.

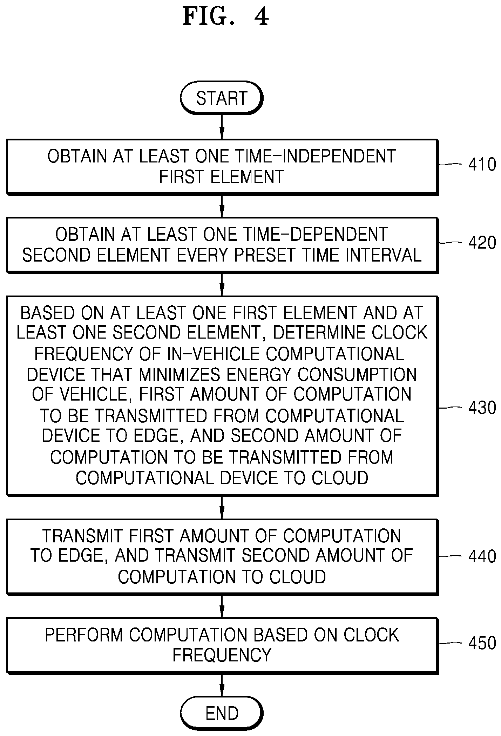

FIG. 4 is a flowchart for describing a method of an amount of computation in a vehicle, according to an embodiment.

Referring to FIG. 4, a method of distributing an amount of computation in the vehicle 10 includes operations that are processed by the device 100 and/or the processor 110 illustrated in FIG. 2, in a time-series manner. Thus, the descriptions provided above regarding the device 100 or the processor 110 illustrated in FIG. 2, which are even omitted below, may also be applied to the method of distributing an amount of computation in the vehicle 10 shown in FIG. 4.

In operation 410, the processor 110 may obtain at least one time-independent first element.

Here, the first element is an element that does not change over time, and may include, but is not limited to, an amount of use of a graphics processing unit (GPU) according to a service requiring processing by the processor 110, the computational processing capacity of the edge 40, and the computational processing capacity of the cloud 30.

For example, the processor (110) may obtain the first element from another computational device in the vehicle 10. In addition, the processor 110 may obtain the first element from an external database, but is not limited thereto.

In operation 420, the processor 110 may obtain at least one time-dependent second element every certain time interval.

Here, the second element is an element that changes over time, and may include, but is not limited to, an amount of computation required to be processed by the computational device 20, a rate of transmission of an amount of computation from the computational device 20 to the edge 40, a rate of transmission of an amount of computation from the computational device 20 to the cloud 30, the queue length of the computational device 20, the queue length of the edge 40, and the queue length of the cloud 30.

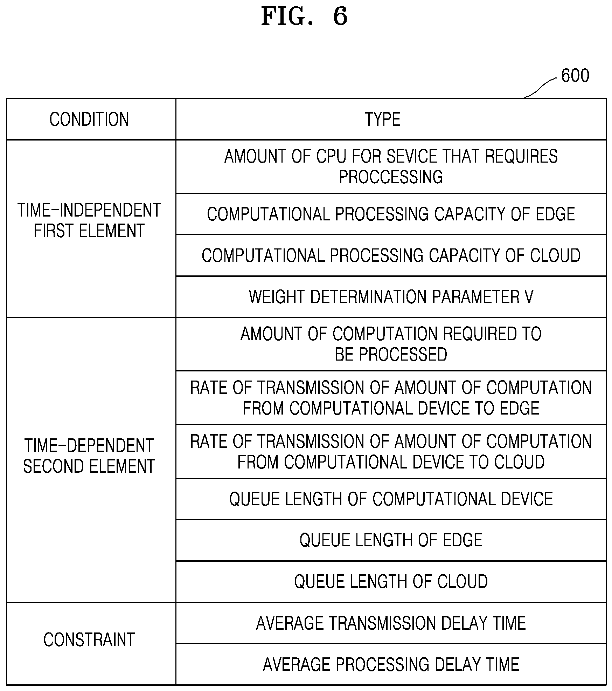

Hereinafter, the first element and the second element will be described in detail with reference to FIG. 6.

In operation 430, based on the at least one first element and the at least one second element, the processor 110 may determine a clock frequency of the computational device 20 that minimizes the energy consumption of the vehicle 10, a first amount of computation to be transmitted from the computational device 20 to the edge 40, and a second amount of computation to be transmitted from the computational device 20 to the cloud 30.

For example, the processor 110 may determine the clock frequency, the first amount of computation, and the second amount of computation, by using a preset equation.

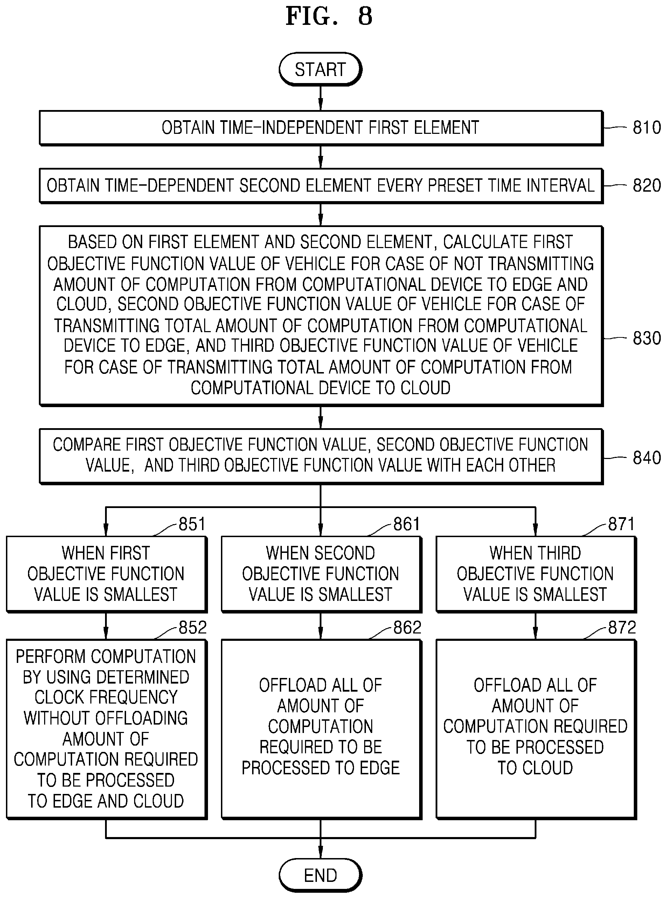

Hereinafter, the equation will be described in detail with reference to FIG. 8.

In addition, the processor 110 may determine the clock frequency, the first amount of computation, and the second amount of computation, by using a neural network model.

For example, the processor 110 may use a time-independent first element and a time-dependent second element as input data of the neural network model. The processor 110 may obtain a clock frequency, a first amount of computation, and a second amount of computation, which are output as the first element and the second element are into the neural network model.

The neural network model refers to a statistical learning algorithm implemented based on the structure of a biological neural network, or a structure for executing the algorithm, in machine learning technology and cognitive science.

For example, the neural network model may refer to a machine learning model that obtains a problem-solving ability by repeatedly adjusting the weights of synapses by nodes that are artificial neurons forming a network in combination with the synapses as in biological neural network, to be trained such that an error between a correct output corresponding to a particular input and an inferred output is reduced. For example, the neural network model may include an arbitrary probability model, a neural network model, and the like, which are used in artificial intelligence learning methods, such as machine learning or deep learning.

For example, the neural network model may be implemented as a multilayer perceptron (MLP) composed of multilayer nodes and connections therebetween. The neural network model according to the present embodiment may be implemented by using one of various artificial neural network model structures including MLP. For example, the neural network model may include an input layer that receives an input signal or data from the outside, an output layer that outputs an output signal or data corresponding to the input data, and at least one hidden layer that is between the input layer and the output layer, and receives a signal from the input layer, extracts features, and delivers the features to the output layer. The output layer receives a signal or data from the hidden layer, and outputs the signal or data to the outside.

In operation 440, the processor 110 may transmit the determined first amount of computation to the edge 40, and transmit the determined second amount of computation to the cloud 30.

In operation 450, the processor 110 may perform computation based on the determined clock frequency.

For example, based on the determined clock frequency, the processor 110 may perform the remaining amount of computation, excluding the first amount of computation transmitted to the edge 40 and the second amount of computation transmitted to the cloud 30, from among the amount of computation required to be processed.

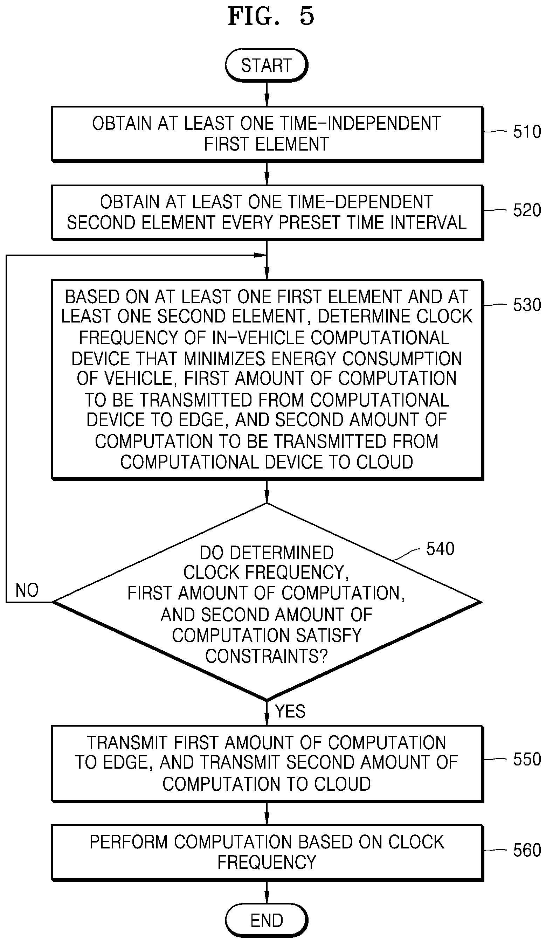

FIG. 5 is a flowchart for describing a method of distributing an amount of computation in a vehicle by using constraints, according to an embodiment.

Referring to FIG. 5, a method of distributing an amount of computation in the vehicle 10 by using constraints includes operations that are processed by the device 100 and/or the processor 110 illustrated in FIG. 2, in a time-series manner. Thus, the descriptions provided above regarding the device 100 or the processor 110 illustrated in FIG. 2, which are even omitted below, may also be applied to the method of distributing an amount of computation in the vehicle 10 by using constraints shown in FIG. 5.

In operation 510, the processor 110 may obtain at least one time-independent first element.

In operation 520, the processor 110 may obtain at least one time-dependent second element every certain time interval.

In operation 530, based on the at least one first element and the at least one second element, the processor 110 may determine a clock frequency of the computational device 20 that minimizes the energy consumption of the vehicle 10, a first amount of computation to be transmitted from the computational device 20 to the edge 40, and a second amount of computation to be transmitted from the computational device 20 to the cloud 30.

In operation 540, the processor 110 may determine whether the determined clock frequency, first amount of computation, and second amount of computation satisfy constraints.

For example, when the processor 110 offloads the first amount of computation to the edge 40, offloads the second amount of computation to the cloud 30, and performs computation based on the determined clock frequency, the processor 110 may determine whether the constraints are satisfied.

For example, the processor 110 may set an average delay time as a constraint. Here, the average delay time may include a first time period, which is an average delay time in transmitting an amount of computation from the computational device 20 to the edge 40 and the cloud 30, and a second time period, which is an average time period taken for the computational device 20, the edge 40, and the cloud 30 to process an amount of computation.

In the related art, an average delay time is not considered in a process of offloading an amount of computation. Accordingly, there is a problem that it may take excessive time for a vehicle to process a service through offloading.

However, the processor 110 may set an average delay time as a constraint and determine the clock frequency, the first amount of computation, and the second amount of computation, such a service required to be processed by the computational device 20 may be processed within a preset time period.

Here, the average delay time may be determined based on the queue lengths of the computational device 20, the edge 40, and the cloud 30, which are included in the second element.

For example, the processor 110 may determine the average delay time by using Little's Law. Little's Law is a basic principle of queuing theory and is used to evaluate and predict the performance of a queuing system.

For example, the processor 110 may determine the average delay time by using Little's law through Equation 1 below.

【Equation 1】

$$Average\ delay\ time = \frac{Average\ queue\ length}{Average\ rate\ of\ input\ of\ amount\ of\ computation}$$

For example, the processor (110) may obtain the average delay time of the edge 40 by dividing the average queue length of the edge 40 by the average rate at which an amount of computation is input to the edge 40. Through this, the processor 110 may determine the average delay time of the edge 40 to be less than or equal to a preset time period, by adjusting the queue length of the edge 40.

When the constraints are not satisfied, in operation 530, the processor 110 may determine again the clock frequency of the processor 110, the first amount of computation, and the second amount of computation.

For example, when the average delay time is greater than the preset time period, the processor 110 may determine again the clock frequency, the first amount of computation, and the second amount of computation such that the average delay time is less than or equal to the preset time period.

When the constraints are satisfied, in operation 550, the processor 110 may transmit the first amount of computation to the edge 40, and transmit the second amount of computation to the cloud 30.

In operation 560, the processor 110 may perform computation based on the determined clock frequency.

For example, based on the clock frequency, the processor 110 may perform the remaining amount of computation, excluding the first amount of computation transmitted to the edge 40 and the second amount of computation transmitted to the cloud 30, from among the amount of computation required to be processed.

FIG. 6 is an exemplary diagram for describing a time-independent first element, a time-dependent second element, and constraints, according to an embodiment.

Referring to FIG. 6, a table 600 shows elements included in the time-independent first element, elements included in the time-dependent second element, and conditions included in the constraints.

Referring to the table 600, the first time-independent element may include, but is not limited to, an amount $\gamma$ of use of a GPU according to a service requiring processing in the computational device 20, the computational processing capacity $s_j$ of the edge 40, the computational processing capacity $s_k$ of the cloud 30, and a weight determination parameter V.

For example, the service requiring processing in the computational device 20 may include, but is not limited to, a service such as an emergency braking system and an automated lane keeping system.

In addition, the amount of use of a GPU may vary depending on the service that requires processing in the computational device 20. For example, the amount of use of a GPU for an emergency braking system may be higher than the amount of use of a GPU for an automated lane keeping system.

In addition, the weight determination parameter is a parameter that may determine the weight between the energy consumption of the vehicle 10 and the average delay time. For example, a user may arbitrarily input a weight determination parameter having a higher value to the computational device 20, for an element that the user wants to assign a higher weight to, from among the energy consumption of the vehicle 10 and the average delay time. In addition, when the energy consumption of the vehicle 10 increases, the computational device 20 may determine the first amount of computation and the second amount of computation, with a higher weight assigned to the energy consumption of the vehicle 10.

The time-dependent second element may include, but is not limited to, the amount 50 of computation required to be processed ($a_i(t)$), a rate of transmission of an amount of computation from the computational device 20 to the edge 40 ($r_{ij}(t)$), a speed of transmission of an amount of computation from the computational device 20 to the cloud 30 ($o_i(t)$), the queue length of the computational device 20 ($Q_i(t)$), the queue length of the edge 40 ($Q_j(t)$), and the queue length of the cloud 30 ($Q_k(t)$).

Here, the amount 50 of computation required to be processed refers to an amount of computation that the computational device 20 needs to process over time.

The device may obtain a time-dependent second element every certain time interval.

The constraints may include, but are not limited to, an average transmission delay time and an average processing delay time.

Here, the average transmission delay time refers to an average delay time in transmitting an amount of computation from the computational device 20 to the edge 40 and the cloud 30. In addition, the average processing delay time refers to an average time period taken for the computational device 20, the edge 40, and the cloud 30 to process an amount of computation.

For example, the device may determine a clock frequency of the computational device 20 that minimizes the energy consumption of the vehicle 10, a first amount of computation to be transmitted from the computational device 20 to the edge 40, and a second amount of computation to be transmitted from the computational device 20 to the cloud 30, within a range that satisfies the average delay time that is a constraint.

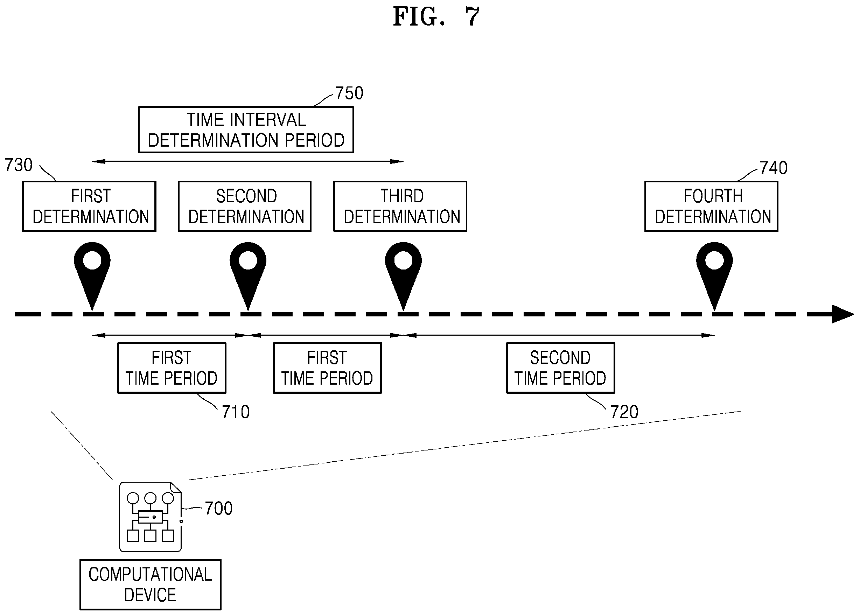

FIG. 7 is an exemplary diagram for describing a method of determining a time interval in which a second element is obtained, according to an embodiment.

Referring to FIG. 7, a computational device 700 may obtain a time-dependent second element every certain time interval. The computational device 700 of FIG. 7 may be the same device as the computational device 20 of FIG. 1.

In addition, based on a time-independent first element and a time-dependent second element, the computational device 700 may determine a clock frequency of the computational device 700, a first amount of computation to be transmitted from the computational device 700 to the edge 40, and a second amount of computation to be transmitted from the computational device 700 to the cloud 30, every certain time interval.

In addition, the computational device 700 may determine the time interval based on an amount of change in the second element for each time interval determination period 750.

For example, the computational device 700 may obtain the second element and perform second determination after a time period equivalent to a first period 710 has elapsed from first determination 730.

However, after the time interval determination period 750 has elapsed from the first determination, the first period 710, which was the certain time interval, may be changed to a second period 720.

For example, when the amount 50 of computation required to be processed at third determination is reduced by more than 1/2 compared to the first determination 730, the computational device 700 may determine that the determination period needs to be reduced, and thus determine the second period 720, which is longer than the first period 710, as the certain time interval.

Accordingly, the computational device 700 may perform fourth determination 740 after the second period 720, rather than the first period 710, has elapsed from the third determination.

FIG. 8 is a flowchart for describing a method of distributing an amount of computation in a vehicle by comparing energy consumption of the vehicle according to whether offloading is performed, according to an embodiment.

Referring to FIG. 8, a method of distributing an amount of computation in the vehicle 10 according to whether offloading is performed includes operations that are processed by the computational device 100 and/or the processor 110 illustrated in FIG. 2, in a time-series manner. Thus, the descriptions provided above regarding the computational device 100 or the processor 110 illustrated in FIG. 2, which are even omitted below, may also be applied to the method of distributing an amount of computation in the vehicle 10 according to whether offloading is performed shown in FIG. 8.

In operation 810, the processor 110 may obtain a time-independent first element.

In operation 820, the processor 110 may obtain a time-dependent second element every preset time interval.

In operation 830, based on the first element and the second element, the processor 110 may calculate a first objective function value of the vehicle 10 for a first case of performing computation in the computational device 20 without transmitting an amount of computation from the computational device 20 to the edge 40 and the cloud 30, a second objective function value of the vehicle 10 for a second case of transmitting a total amount of computation from the computational device 20 to the edge 40, and a third objective function value of the vehicle 10 for a third case of transmitting a total amount of computation from the computational device 20 to the cloud 30. Here, the objective function value refers to a value calculated by considering the energy consumption of the vehicle, a queue length, and an amount of processed computation.

For example, the processor 110 may calculate the first objective function value, the second objective function value, and the third objective function value by using Equation 2 below.

【Equation 2】

$$Objective\ function\ value = \triangle(L(Q(t))) + VE\{\Sigma_i p_i^u(s_i(t)(1-\Sigma_j\Theta_{ij}(t)-\sigma_i(t))) + p_i^n(\sigma_i(t)+\Sigma_j\Theta_{ij}(t))\|Q(t)\}$$

Here, $s_i(t)$ denotes a clock frequency of the computational device 20 in the vehicle 10. In addition, $p_i^u(s_i(t)(1-\Sigma_j\Theta_{ij}(t)-\sigma_i(t)))$ denotes a first function for energy consumed according to the clock frequency of the computational device 20.

In addition, $p_i^n(\sigma_i(t)+\Sigma_j\Theta_{ij}(t))$ denotes a second function for energy consumed when the computational device 20 transmits an amount of computation to the edge 40, and energy consumed when the computational device 20 transmits an amount of computation to the cloud 30.

For example, in the first case in which computation is performed in the computational device 20 without transmitting an amount of computation from the computational device 20 to the edge 40 and the cloud 30, the processor 110 may calculate the first objective function value by substituting $\Theta_{ij}(t)$ and $\sigma_i(t)$ into Equation 1.

For example, the energy consumption of the vehicle 10 for the first case is expressed in Equation 3 below.

【Equation 3】

$$First\ objective\ function\ value = \min V p_i^u(s_i(t)) - ((\frac{s_i(t)}{\gamma} - a_i(t))Q_i(t)$$

For example, the processor 110 may determine a clock frequency $s_i(t)$ at which the energy consumption of the vehicle 10 is minimal. In addition, the processor 110 may calculate the first objective function value by substituting the determined clock frequency into Equation 3.

In addition, in the second case of transmitting a total amount of computation from the computational device 20 to the edge 40, the processor 110 may calculate the second objective function value by substituting $\Theta_{ij}(t)=1$ and $\sigma_i(t)=0$ into Equation 1.

In addition, in the third case of transmitting a total amount of computation from the computational device 20 to the cloud 30, the processor 110 may calculate the third objective function value by substituting $\Theta_{ij}(t)=0$ and $\sigma_i(t)=1$ into Equation 1.

In operation 840, the processor 110 may compare the calculated first objective function value, second objective function value, and third objective function value with each other.

When the first objective function value has the smallest (851), in operation 852, the processor 110 may perform computation by using the determined clock frequency without offloading the amount of computation required to be processed to the edge 40 and the cloud 30.

When the second objective function value has the smallest (861), in operation 862, the processor 110 may offload all of the amount of computation required to be processed to the edge 40.

When the third objective function value has the smallest (871), in operation 872, the processor 110 may offload all of the amount of computation required to be processed to the cloud 30.

An embodiment of the present disclosure may be implemented as a computer program that may be executed through various components on a computer, and such a computer program may be recorded in a computer-readable medium. In this case, the medium may include a magnetic medium, such as a hard disk, a floppy disk, or a magnetic tape, an optical recording medium, such as a CD-ROM or a DVD, a magneto-optical medium, such as a floptical disk, and a hardware device specially configured to store and execute program instructions, such as ROM, RAM, or flash memory.

Meanwhile, the computer program may be specially designed and configured for the present disclosure or may be well-known to and usable by those skilled in the art of computer software. Examples of the computer program may include not only machine code, such as code made by a compiler, but also high-level language code that is executable by a computer by using an interpreter or the like.

According to an embodiment, the method according to various embodiments of the present disclosure may be included in a computer program product and provided. The computer program product may be traded as commodities between sellers and buyers. The computer program product may be distributed in the form of a machine-readable storage medium (e.g., a CD-ROM), or may be distributed online (e.g., downloaded or uploaded) through an application store (e.g., Play Store™) or directly between two user devices. In a case of online distribution, at least a portion of the computer program product may be temporarily stored in a machine-readable storage medium such as a manufacturer's server, an application store's server, or a memory of a relay server.

The operations of the methods according to the present disclosure may be performed in any suitable order unless otherwise indicated herein or otherwise clearly contradicted by context. The present disclosure is not limited to the described order of the operations. The use of any and all examples, or exemplary language (e.g., 'and the like') provided herein, is intended merely to better illuminate the present disclosure and does not pose a limitation on the scope of the present disclosure unless otherwise claimed. Also, numerous modifications and adaptations will be readily apparent to those skilled in the art without departing from the spirit and scope of the present disclosure.

Accordingly, the spirit of the present disclosure should not be limited to the above-described embodiments, and all modifications and variations which may be derived from the meanings, scopes and equivalents of the claims should be construed as failing within the scope of the present disclosure.

**Claims**

1.   A method of determining optimal load balancing of a computational device in a vehicle, the method comprising:

   obtaining at least one first element that is time-independent;
   obtaining at least one second element that is time-dependent, every preset time interval;
   based on the at least one first element and the at least one second element, determining a clock frequency of the computational device in the vehicle that minimizes energy consumption of the vehicle, a first amount of computation to be transmitted from the computational device to an edge, and a second amount of computation to be transmitted from the computational device to a cloud;
   transmitting the first amount of computation to the edge and transmitting the second amount of computation to the cloud; and
   performing computation based on the clock frequency.

2.   The method of claim 1, wherein the first element comprises an amount of use of a graphics processing unit (GPU) according to a service that requires processing by the computational device, computational processing capacity of the edge, and computational processing capacity of the cloud, and
   the second element comprises an amount of computation required to be processed by the computational device, a rate of transmission of an amount of computation from the computational device to the edge, a rate of transmission of an amount of computation from the computational device to the cloud, a queue length of the computational device, a queue length of the edge, and a queue length of the cloud.

3.   The method of claim 1, wherein the determining comprises determining the clock frequency, the first amount of computation, and the second amount of computation by using an average delay time as a constraint, and
   the average delay time comprises at least one of a first time period, which is an average delay time in transmitting an amount of computation from the computational device to the edge and the cloud, and a second time period, which is an average time period taken for the computational device, the edge, and the cloud to process an amount of computation.

4.   The method of claim 3, wherein the average delay time is determined based on queue lengths of the computational device, the edge, and the cloud.

5.   The method of claim 3, wherein the average delay time is set according to a service that requires processing by the computational device.

6.   The method of claim 1, wherein the determining is performed by using a first function for energy consumed according to the clock frequency of the computational device, and a second function for energy consumed when the computational device transmits the amount of computation to the edge, and energy consumed when the computational device transmits the amount of computation to the cloud.

7. The method of claim 1, wherein the preset time interval is determined based on an amount of change in the second element.

8. The method of claim 1, wherein the determining comprises determining the clock frequency, the first amount of computation, and the second amount of computation by considering a parameter that determines a weight between average delay time and energy consumption of the vehicle.

9. The method of claim 1, wherein the determining comprises determining the clock frequency, the first amount of computation, and the second amount of computation by using a time-based dynamic optimization technique.

10. The method of claim 1, wherein the determining comprises determining the clock frequency, the first amount of computation, and the second amount of computation by comparing a first objective function value of the vehicle for a case of not transmitting an amount of computation from the computational device to the edge and the cloud, a second objective function value of the vehicle for a case of transmitting a total amount of computation from the computational device to the edge, and a third objective function value of the vehicle for a case of transmitting the total amount of computation from the computational device to the cloud.

11. The method of claim 1, wherein the determining comprises determining the clock frequency of the computational device in the vehicle, the first amount of computation to be transmitted from the computational device to the edge, and the second amount of computation to be transmitted from the computational device to the cloud, by using a neural network model that uses the first element and the second element as input values.

12. A computing device comprising:

at least one memory; and
at least one processor,
wherein the at least one processor is configured to obtain at least one first element that is time-independent, obtain at least one second element that is time-dependent, every preset time interval, determine, based on the at least one first element and the at least one second element, a clock frequency of a computational device in a vehicle that minimizes energy consumption of the vehicle, a first amount of computation to be transmitted from the computational device to an edge, and a second amount of computation to be transmitted from the computational device to a cloud, transmit the first amount of computation to the edge and transmit the second amount of computation to the cloud, and perform computation based on the clock frequency.

13. A computer-readable recording medium having recorded thereon a program for causing a computer to execute the method of claim 1.

**FIG. 1**

EP 4 621 571 A1

# FIG. 2

# FIG. 3

COMPUTATIONAL DEVICE 310 → NETWORK ↔ EXTERNAL DEVICE 320

# FIG. 4

START

OBTAIN AT LEAST ONE TIME-INDEPENDENT FIRST ELEMENT — 410

OBTAIN AT LEAST ONE TIME-DEPENDENT SECOND ELEMENT EVERY PRESET TIME INTERVAL — 420

BASED ON AT LEAST ONE FIRST ELEMENT AND AT LEAST ONE SECOND ELEMENT, DETERMINE CLOCK FREQUENCY OF IN-VEHICLE COMPUTATIONAL DEVICE THAT MINIMIZES ENERGY CONSUMPTION OF VEHICLE, FIRST AMOUNT OF COMPUTATION TO BE TRANSMITTED FROM COMPUTATIONAL DEVICE TO EDGE, AND SECOND AMOUNT OF COMPUTATION TO BE TRANSMITTED FROM COMPUTATIONAL DEVICE TO CLOUD — 430

TRANSMIT FIRST AMOUNT OF COMPUTATION TO EDGE, AND TRANSMIT SECOND AMOUNT OF COMPUTATION TO CLOUD — 440

PERFORM COMPUTATION BASED ON CLOCK FREQUENCY — 450

END

# FIG. 5

START

OBTAIN AT LEAST ONE TIME-INDEPENDENT FIRST ELEMENT — 510

OBTAIN AT LEAST ONE TIME-DEPENDENT SECOND ELEMENT EVERY PRESET TIME INTERVAL — 520

BASED ON AT LEAST ONE FIRST ELEMENT AND AT LEAST ONE SECOND ELEMENT, DETERMINE CLOCK FREQUENCY OF IN-VEHICLE COMPUTATIONAL DEVICE THAT MINIMIZES ENERGY CONSUMPTION OF VEHICLE, FIRST AMOUNT OF COMPUTATION TO BE TRANSMITTED FROM COMPUTATIONAL DEVICE TO EDGE, AND SECOND AMOUNT OF COMPUTATION TO BE TRANSMITTED FROM COMPUTATIONAL DEVICE TO CLOUD — 530

DO DETERMINED CLOCK FREQUENCY, FIRST AMOUNT OF COMPUTATION, AND SECOND AMOUNT OF COMPUTATION SATISFY CONSTRAINTS? — 540

NO

YES

TRANSMIT FIRST AMOUNT OF COMPUTATION TO EDGE, AND TRANSMIT SECOND AMOUNT OF COMPUTATION TO CLOUD — 550

PERFORM COMPUTATION BASED ON CLOCK FREQUENCY — 560

END

# FIG. 6

600

| CONDITION | TYPE |
|---|---|
| TIME-INDEPENDENT FIRST ELEMENT | AMOUNT OF CPU FOR SEVICE THAT REQUIRES PROCCESSING |
| | COMPUTATIONAL PROCESSING CAPACITY OF EDGE |
| | COMPUTATIONAL PROCESSING CAPACITY OF CLOUD |
| | WEIGHT DETERMINATION PARAMETER V |
| TIME-DEPENDENT SECOND ELEMENT | AMOUNT OF COMPUTATION REQUIRED TO BE PROCESSED |
| | RATE OF TRANSMISSION OF AMOUNT OF COMPUTATION FROM COMPUTATIONAL DEVICE TO EDGE |
| | RATE OF TRANSMISSION OF AMOUNT OF COMPUTATION FROM COMPUTATIONAL DEVICE TO CLOUD |
| | QUEUE LENGTH OF COMPUTATIONAL DEVICE |
| | QUEUE LENGTH OF EDGE |
| | QUEUE LENGTH OF CLOUD |
| CONSTRAINT | AVERAGE TRANSMISSION DELAY TIME |
| | AVERAGE PROCESSING DELAY TIME |

# FIG. 7

TIME INTERVAL DETERMINATION PERIOD /750

730

| FIRST DETERMINATION | SECOND DETERMINATION | THIRD DETERMINATION | FOURTH DETERMINATION /740 |

| FIRST TIME PERIOD | FIRST TIME PERIOD | SECOND TIME PERIOD |

710

720

COMPUTATIONAL DEVICE /700

EP 4 621 571 A1

# FIG. 8

START

OBTAIN TIME-INDEPENDENT FIRST ELEMENT — 810

OBTAIN TIME-DEPENDENT SECOND ELEMENT EVERY PRESET TIME INTERVAL — 820

BASED ON FIRST ELEMENT AND SECOND ELEMENT, CALCULATE FIRST OBJECTIVE FUNCTION VALUE OF VEHICLE FOR CASE OF NOT TRANSMITTING AMOUNT OF COMPUTATION FROM COMPUTATIONAL DEVICE TO EDGE AND CLOUD, SECOND OBJECTIVE FUNCTION VALUE OF VEHICLE FOR CASE OF TRANSMITTING TOTAL AMOUNT OF COMPUTATION FROM COMPUTATIONAL DEVICE TO EDGE, AND THIRD OBJECTIVE FUNCTION VALUE OF VEHICLE FOR CASE OF TRANSMITTING TOTAL AMOUNT OF COMPUTATION FROM COMPUTATIONAL DEVICE TO CLOUD — 830

COMPARE FIRST OBJECTIVE FUNCTION VALUE, SECOND OBJECTIVE FUNCTION VALUE, AND THIRD OBJECTIVE FUNCTION VALUE WITH EACH OTHER — 840

WHEN FIRST OBJECTIVE FUNCTION VALUE IS SMALLEST — 851

WHEN SECOND OBJECTIVE FUNCTION VALUE IS SMALLEST — 861

WHEN THIRD OBJECTIVE FUNCTION VALUE IS SMALLEST — 871

PERFORM COMPUTATION BY USING DETERMINED CLOCK FREQUENCY WITHOUT OFFLOADING AMOUNT OF COMPUTATION REQUIRED TO BE PROCESSED TO EDGE AND CLOUD — 852

OFFLOAD ALL OF AMOUNT OF COMPUTATION REQUIRED TO BE PROCESSED TO EDGE — 862

OFFLOAD ALL OF AMOUNT OF COMPUTATION REQUIRED TO BE PROCESSED TO CLOUD — 872

END

## INTERNATIONAL SEARCH REPORT

| International application No. |
|---|
| **PCT/KR2023/021288** |

| A. | CLASSIFICATION OF SUBJECT MATTER |
|---|---|

**G06F 9/50**(2006.01)i; **G06F 9/54**(2006.01)i; **G06F 9/48**(2006.01)i

According to International Patent Classification (IPC) or to both national classification and IPC

| B. | FIELDS SEARCHED |
|---|---|

Minimum documentation searched (classification system followed by classification symbols)

G06F 9/50(2006.01); G06F 9/445(2006.01); G06F 9/48(2006.01); G08G 1/01(2006.01); H04L 67/60(2022.01); H04W 24/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 차량(vehicle), 최적(optimal), 로드밸런싱(load balancing), 시간(time), 주기(period), 에너지(energy), 소모(consumption), 연산(computation), 클록 주파수(clock frequency), 엣지(edge), 클라우드(cloud)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 111836284 A (CHONGQING UNIVERSITY OF POSTS AND TELECOMMUNICATIONS) 27 October 2020 (2020-10-27)<br>See claims 1-2 and 4. | 1,7,9,11-13 |
| A | | 2-6,8,10 |
| Y | CN 114863683 A (HUNAN UNIVERSITY) 05 August 2022 (2022-08-05)<br>See paragraph [0003]; and claims 1 and 3. | 1,7,9,11-13 |
| A | CN 113961266 A (XIANGTAN UNIVERSITY) 21 January 2022 (2022-01-21)<br>See claim 1. | 1-13 |
| A | KR 10-2022-0041576 A (INNOGRID, INC.) 01 April 2022 (2022-04-01)<br>See paragraphs [0092]-[0119]; claims 1 and 6; and figure 7. | 1-13 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 July 2024** | **16 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/021288**

**C.    DOCUMENTS CONSIDERED TO BE RELEVANT**

| Category* | Citation of document, with indication, where appropriate, of the relevant passages | Relevant to claim No. |
|---|---|---|
| A | KWAK, Jeongho et al. DREAM: Dynamic Resource and Task Allocation for Energy Minimization in Mobile Cloud Systems. IEEE Journal on Selected Areas in Communications. Volume 33, Issue 12, pp. 2510-2523, 14 September 2015.<br>    See pages 2510-2521. | 1-13 |

## INTERNATIONAL SEARCH REPORT
### Information on patent family members

| International application No. |
| --- |
| **PCT/KR2023/021288** |

| Patent document cited in search report | | | Publication date (day/month/year) | Patent family member(s) | | | Publication date (day/month/year) |
| --- | --- | --- | --- | --- | --- | --- | --- |
| CN | 111836284 | A | 27 October 2020 | CN | 111836284 | B | 05 April 2022 |
| CN | 114863683 | A | 05 August 2022 | CN | 114863683 | B | 04 July 2023 |
| CN | 113961266 | A | 21 January 2022 | CN | 113961266 | B | 22 August 2023 |
| KR | 10-2022-0041576 | A | 01 April 2022 | KR | 10-2413923 | B1 | 29 June 2022 |

Form PCT/ISA/210 (patent family annex) (July 2022)